# EUROPEAN PATENT SPECIFICATION

(11) **EP 0 479 954 B1**
(45) Date of publication and mention of the grant of the patent: **14.06.1995**
(21) Application number: 91903888.5
(22) Date of filing: 07.02.1991
(51) Int. Cl.: B23B 41/00

(54) **DRILLING MACHINE OR DRILLING INSTALLATION FOR PROFILE STEEL OR PLATE**
BOHRMASCHINE ODER BOHRINSTALLATION FÜR STAHLPROFILE ODER PLATTEN
PERCEUSE OU INSTALLATION DE PERCAGE POUR ACIER OU PLAQUE PROFILE(E)

(30) Priority: 09.02.1990 NL 9000319
(43) Date of publication of application: 15.04.1992
(73) Proprietor: Luyken, Aloysius Marinus, NL-5364 PR Escharen (NL)
(72) Inventor: Luyken, Aloysius Marinus, NL-5364 PR Escharen (NL)
(86) International application number: NL9100018
(87) International publication number: WO9112105

(56) References cited:
- DE-A- 2 646 179
- FR-B- 2 050 688
- NL-A- 8 101 080

## Description

The invention is the application of a new concept of mobile drilling units or drilling machines for drilling profile steel and plate which can be combined more favorably with other machines or installations for sawing, cutting and blasting profile steel and steel plate.

In DE-A-2 646 179 a position control system for a piercing equipment is described which has a photo-electric calibration appliance.

This appliance is coupled with the positioning device.

The material to be worked is gripped or clamped and two slides are moved over the surface in both directions (longitudinal and transverse), and one of the slides is provided with a drilling head having a hydraulic drive. On the indicated points the drilling is carried out by the drilling head of the slide.

This method can only be used for small articles, and not too complex substrates, such as parts for customary articles, instruments etc.

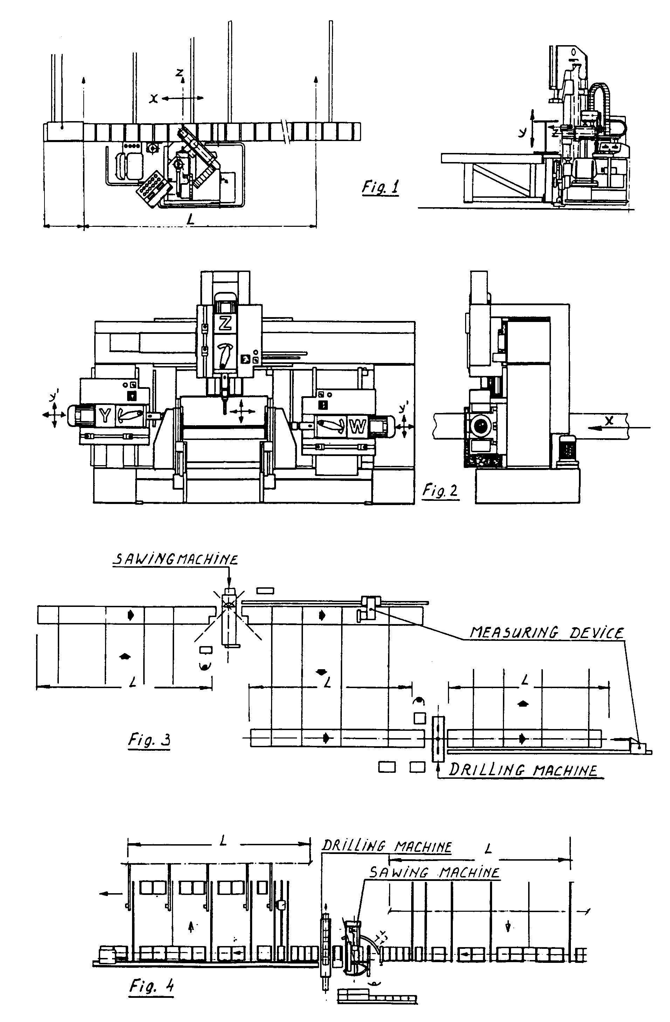

Also known are the stationery 1-, 2- , 3- or multispindle-drillingmachines for profile steel and plate in which the material is guided through the drilling machine and positioned longitudinally in relation to the drilling units by a measuring device (fig. 2, 3 and 4).

Disadvantages of this method are:
- though 3 or more drilling spindles are available their use is restricted, because they are positioned and moving in the same flat vertical area and since the holes in 3 sides of the material are seldom in this one single area, usually only one drilling spindle is active at a time.
- the machine occupies a lot of space in the workshop, because head and rear end of the machine must be available at the maximum length of material to be drilled (fig. 3 and 4).
- that, when a drilling machine is positioned directly adjacent to a sawing machine in order to save costs by using the same length measuring system, the same inlet and outlet installations for both machines and also by using only 1 operator instead of 2, you cannot drill during the sawing process or that you cannot saw during the drilling process, so that the entire installation can only utilize max. 50% of the actual independent capacities of both machines (fig. 4).
   Not known is a 1- or multi spindle drilling installation or drilling machine to drill profile steel which has for each side 1 or more drilling heads able to move independently or not independently from each other or able to position themselves in relation to the material, using:
- either a controllable and mobile length measuring stop.
- or a contactless location measuring of the material to position the drilling head(s) in relation to the material.

Likewise, it is not known that the possibilities mentioned earlier are combined with a sawing, cutting or blasting installation or other installation.

Also not known is a drilling installation as mentioned earlier which uses hollow drills or hole boring cutters in the mobile drilling units instead of spiral drills.

This invention aims at providing a series of drilling installations which by their concept do not possess the above-mentioned disadvantages and objections of known installations which offer as stand-alone units a higher production and a lower cost price, whereas the coupling with other installations like sawing, cutting and blasting installations provide even more advantages.

A further advantage of coupling such a drilling machine to a sawing machine is that substantial savings are made, because:
- the sawing and drilling process can take place simultaneously, so that a high production per time unit is reached.
- the length measuring device of the drilling head(s) can also be used for the sawing machine.
- 1 operator can simultaneously operate the sawing and drilling installation.
- the construction of the installation can be cheaper.

This goal is reached by the drilling machine according to claim 1. One or more drilling heads are mobile in relation to the material (with which using spiral or hollow drills or hole boring cutters one can drill holes in the material), using a controllable mobile length measuring stop and/or mobile contactless detector, combined or not with other sawing, cutting and blasting installations without being dependent on a fixed or manually movable length measuring stop.

The invention will be illustrated further by fig.5 to 8.

Fig.5 and 6 show a drilling machine with 1 drilling head that can be positioned in relation to the material.

Fig.7 shows a drilling machine with 3 drilling heads and fig.8 shows a drilling machine with more independently mobile drilling heads which position themselves in relation to the material.

In order to position the drilling heads either a length measuring stop is used to determine the position of the material in a contactless process or a controllable length measuring stop is used to determine the position of the material.

In a combination with a sawing machine or a cutting installation, this position measuring is also used for the sawing or cutting process.

As soon as the material is moving, the new position of the material will be determined by the measuring device and will be used for positioning the drilling heads, sawing machine or cutting machine, or for the location in relation to stationery sawing machines.

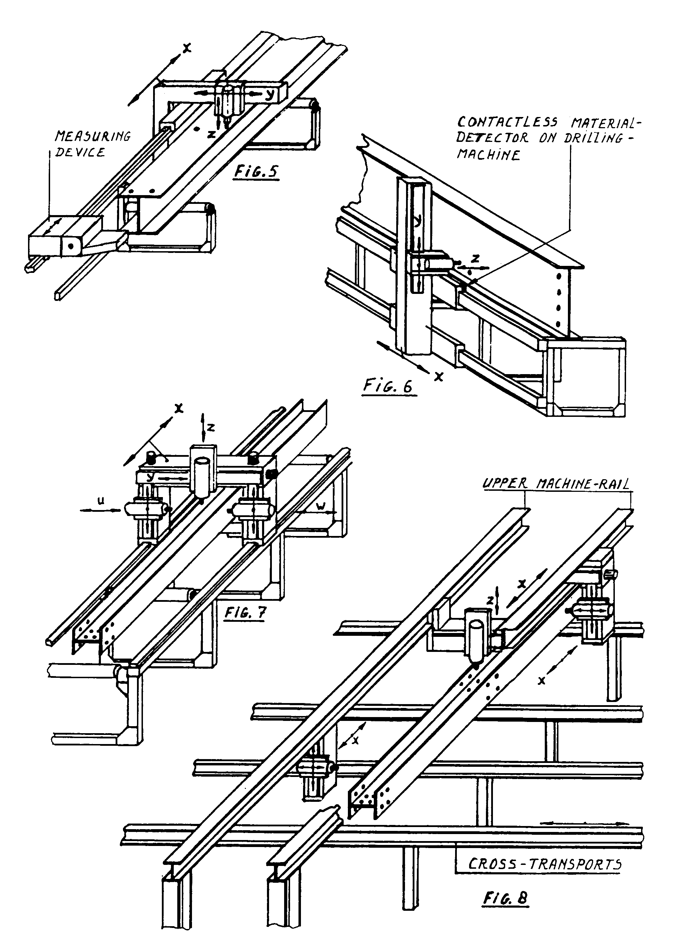

One possible execution is shown in fig.5 in which a controllable length measuring stop determines the position of the material, and in which the position of the material is used to position the drilling heads. Another possible execution is one in which the mobile drilling column is equipped with a swivelling stop, which determines the longitudinal position of the material against the head of the material by:
- stopping as soon as the material is touched
- or, by taking the material along to the place desired by the movement of the drilling column
- or, by moving the material against the drilling column which at that moment is standing still in order to start the drilling process as soon as the stop has swivelled away.

There are several possible executions to determine the position of the material using the contactless measuring device.

One possible execution is shown in fig.6, in which a contactless switch, mounted on the mobile drilling column, releases an impulse when the machine is moving along the beginning of the material, thus determining the position of the material in longitudinal direction for positioning the drilling head and processing the material.

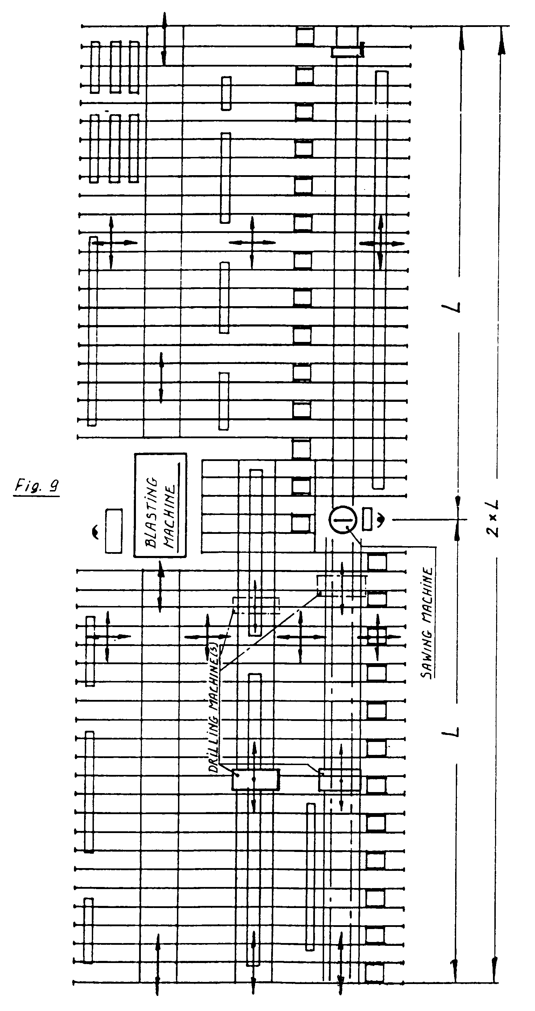

Fig.9 shows a plan of a drilling installation according to fig. 8 combined with a sawing machine and a blasting installation coupled to roller conveyors and cross conveyor devices. In this figure it becomes clear that compared to a conventional installation like in fig. 3 and 4:
- less floor area is needed resulting in direct cost savings and allowing to fit such an installation in companies having little room available.
- only 1 operator is needed to operate and check the sawing machine, the drilling machine and the blasting machine without affecting the production capacity of the separate units, which in turn provides a considerable and permanent cost saving.
- the material route is shorter and more direct and therefore more surveyable, reducing the loss of energy and time as a result of intervening material transport and the cranes present stay available for other duties, which again has a cost saving effect.

## Claims

1. Drilling machine or drilling installation to drill holes in profile steel or plate steel comprising a drilling head in which a drilling tool is placed in order to drill and which can move and position it-self in 3 axes (X-Y-Z) in relation to the material **characterised in** that the drilling position of the drilling head is reached and is controlled in relation to the position of the material to be drilled, the position of the material being determined by a mobile location measuring system consisting of at least one controllable mobile measuring stop, or a mobile contactless detector, whereby said at least one stop or detector is movable with respect to the material.

2. Drilling machine or drilling installation to drill holes in profile steel or plate steel according to claim 1 **characterised in** that it possesses 1 or more drilling heads at 1 or more sides of the material.

3. Drilling machine or drilling installation to drill holes in profile steel or plate steel according to claim 1 and 2 **characterised in** that the location measuring system or the controllable measuring stop is mounted on the construction of one or more of the positionable drilling head(s).

4. Drilling machine or drilling installation to drill holes in profile steel or plate steel according to claim 1 to 3 **characterised in** that it possesses 1 or more drilling heads at 3 sides of the material.

5. Drilling machine or drilling installation to drill holes in profile steel or plate steel according to claim 1 to 4 **characterised in** that in the drilling heads use is made of hollow drills, hole boring cutters or that use is made of metal cutting tools instead of spiral drills.

6. Drilling machine or drilling installation to drill holes in profile steel or plate steel according to claims 1 to 5 **characterised in** that the drilling process is combined with a cutting process and/or sawing process and/or an installation to blast or preserve.

## Patentansprüche

1. Die Bohrmaschine oder Bohrinstallation für die Bohrung in Profilsthal oder Stahlplatten mit einem Bohrkopf, in dem ein Bohrwerkzeug untergebracht ist und der sich selbst auf drei Achsen (X-Y-Z) im Verhältnis zu dem Material bewegen und positionieren kann, **ist dadurch gekennzeichnet**, daß die Bohrposition des Bohrkopfes im Verhältnis zu der Lage des Materials, in das gebohrt werden soll, erreicht und überwacht wird, wobei die Materialposition mit Hilfe eines beweglichen Stellungsmeßsystems bestimmt wird, das aus wenigstens einer regelbaren beweglichen Meßvorrichtung oder einem beweglichen berührungslosen Detektor besteht und bei dem wenigstens ein Vorstoß oder Detektor in bezug auf das Material beweglich ist.

2. Die Bohrmaschine oder Bohrinstallation für das Bohren in Profilstahl oder Stahlplatten gemäß Patentanspruch 1 **ist dadurch gekennzeichnet**, daß sie 1 oder mehrer Bohrköpfe auf 1 oder mehreren Seiten des Materials besitzt.

3. Die Bohrmaschine oder Bohrinstallation für das Bohren in Profilstahl oder Stahlplatten gemäß Patentanspruch 1 und 2 **ist dadurch gekennzeichnet**, daß das Positioniersystem auf dem Rahmen von einem oder mehreren der positionierbaren Bohrköpfe befestigt sind.

4. Die Bohrmaschine oder Bohrinstallation für das Bohren in Profilstahl oder Stahlplatten gemäß Patentanspruch 1 bis 3 **ist dadurch gekennzeichnet**, daß sie 1 oder mehrere Bohrköpfe auf 3 Seiten des Materials besitzt.

5. Die Bohrmaschine oder Bohrinstallation für das Bohren in Profilstahl oder Stahlplatten gemäß Patentanspruch 1 bis 4 **ist dadurch gekennzeichnet**, daß in den Bohrköpfen Hohlbohrer, Bohrschneidstahl für Ausdreharbeiten bzw. Metallschneidewerkzeug anstelle von Spiralbohrern verwendet werden.

6. Die Bohrmaschine oder Bohrinstallation für das Bohren in Profilstahl oder Stahlplatten gemäß Patentanspruch 1 bis 5 **ist dadurch gekennzeichnet**, daß der Bohrprozeß mit einem Schneide- und/oder Sägeprozeß und/oder einer Installation für das Schießen oder Konservieren kombiniert wird.

## Revendications

1. Perceuse ou installation de perçage pour forer des trous dans des profilés ou des plaques d'aciers comprenant un mandrin dans lequel un outil de perçage est fixé pour forer et qui peut se déplacer et se positionner par rapport au matériau dans les trois dimensions (axes X-Y-Z) caractérisée par le fait que la position de perçage du mandrin est atteinte et déterminée en relation avec la position du matériau à percer, la position du matériau étant déterminée par un dispositif de mesure mobile constitué par au moins un butoir mesureur mobile réglable ou un télédétecteur mobile, étant entendu qu'au moins un butoir ou un détecteur est mobile par rapport au matériau.

2. Perceuse ou installation de perçage pour forer des trous dans des profilés ou des plaques en acier conformément à l'exigence 1 et caractérisée par le fait qu'elle possède un mandrin ou plus sur un côté ou plus du matériau.

3. Perceuse ou installation de perçage pour forer des trous dans des profilés ou des plaques en acier conformément aux exigences 1 et 2 et caractérisée par le fait que le dispositif de mesure est monté sur le support d'un ou plus des mandrins réglables.

4. Perceuse ou installation de perçage pour forer des trous dans des profilés ou des plaques en acier conformément aux exigences 1 à 3 et caractérisée par le fait qu'elle possède un mandrin ou plus sur les trois côtés du matériau.

5. Perceuse ou installation de perçage pour forer des trous dans des profilés ou des plaques en acier conformément aux exigences 1 à 4 caractérisée par le fait que les mandrins sont utilisés pour des mèches creuses, des couteaux ou des outils à découper les métaux au lieu de mèches hélicoïdales.

6. Perceuse ou installation de perçage pour forer des trous dans des profilés ou des plaques en acier conformément aux exigences 1 à 5 caractérisée par le fait que le perçage est associé à un découpage et/ou un sciage et/ou une installation de grenaillage ou de protection.
